# EUROPEAN PATENT APPLICATION

(11) **EP 2 846 055 A1**
(43) Date of publication of application: **11.03.2015**
(21) Application number: 14178895.0
(22) Date of filing: 29.07.2014
(51) Int. Cl.: F16B 37/12

(54) **Threaded insert**

(30) Priority: 06.09.2013 US 201314020632
(71) Applicant: Hayward Industries, Inc., Elizabeth NJ 07201 (US)
(72) Inventor: Hoots, Joshua Lee, Clemmons, NC 27012 (US); Stone, Jon Terrence, Clemmons, NC 27012 (US)
(74) Representative: Hoffmann Eitle

(57) **Abstract**

A threaded insert (10) comprises: a tubular body (12) having a length (L) extending along a central axis (5) between a first end (14) and a second end (16); an internal thread (24) extending circumferentially about an inner surface (20) of the tubular body (12); one or more surface features (26) extending, at least partially, radially outward from an outer surface (22) of the tubular body (12); and a longitudinally extending slot (36) formed in the tubular body (12), the slot (36) extending the length (L) of the tubular body (12) to form a circumferential discontinuity along the length (L) of the tubular body (12) from the first end (14) to the second end (16).

## Description

### BACKGROUND

### Field of Technology

Exemplary embodiments are generally related to threaded inserts, and more particularly, to radially compressible and/or expandable threaded inserts.

### Brief Discussion of Related Art

Threaded inserts are commonly used with plastic and/or wooden receiving structures having holes with no internal thread, but which are configured to receive male-type fastening devices using threaded inserts. Threaded inserts typically include an internal thread, which may be blind, or may be completely through the part, and an outer surface having a knurl or some other engaging geometry. The threaded inserts can be received by a hole of a receiving structure to provide an interface between the holes and the male-type fastening devices such that the knurl of the insert interacts with the hole to secure the insert within the hole and the internal thread of the insert interacts with the external thread of the male-type fastening device to secure the male-type fastening device to the threaded insert. One advantage of threaded inserts is that parts can be manufactured with unthreaded holes, and the holes can be quickly and easily adapted for use with fasteners simply by installing a threaded insert. Another advantage of threaded inserts is that metal threaded inserts can often provide a stronger thread than a base material of the receiving structure (e.g., wood or plastic) into which the insert is installed.

Threaded inserts can be manufactured as a single unitary structure or a multicomponent structure using brass or stainless steel and are typically installed in a hole of a receiving structure using one of several approaches, such as over-molding, press-fitting, heated press-fitting, vibration/ultra-sonic welding, and threaded engagement. Over-molding, heated press-fit, and vibration welding approaches are typically available for use with plastic receiving structures (e.g., these approaches typically cannot be used for wooden receiving structures). The over-molding approach includes placing a threaded insert into a mold and molding a plastic receiving structure around the threaded insert. The press-fit approach includes pressing a threaded insert into a bore or hole of a receiving structure, which retains the threaded insert via friction. The heated press-fit approach includes heating a threaded insert and pressing the heated insert into a bore or hole of a plastic receiving structure causing the plastic receiving structure to melt and bond around the threaded insert. The vibrational/ultra-sonic welding approach includes placing a threaded insert and a plastic receiving structure onto a fixture and vibrating the threaded insert at high frequency while forcing the threaded insert into a bore or hole formed in the plastic receiving structure, thereby creating heat and causing the part to melt and bond around the insert. The threaded engagement approach can be used when a threaded insert includes a threaded outer surface, which engages an interior surface of a bore or hole in a plastic receiving structure, typically threading the interior surface as the insert is driven into place.

One type of conventional threaded insert is a split body insert. Like other conventional threaded inserts, these split body inserts have a threaded inner surface and a knurl or other engaging geometry on the outer surface. A first end portion of these split body inserts generally have fixed dimensions and often include a flanged portion and the internal thread. The second end portion often has two slots extending along a portion of the insert's length. For example, in some split body designs, the slots may only extend half or three quarters of the length of the insert. When mating hardware (screw, bolt, etc.) is received, the first end portion engages the mating hardware and the lower slotted portion of the insert expands and engages the mating bore or hole. The portion of the insert near the flange end acts to retain the mating hardware within the insert, while the split portion of the insert acts to retain the insert within the mating bore or hole.

Another type of conventional threaded insert is a multi-piece construction threaded insert. One example of a multi-piece threaded insert can include a main component and a secondary component. The main component resembles a bolt having a flange end or head at a proximal end and an externally threaded portions at the distal end. An inner surface of the main component includes an internal thread. The secondary component is often simply a nut having an internal thread configured to engage the external thread on the main component. To install this type of insert, the main component is installed in a through hole on the receiving structure and the nut is threaded onto the body. The receiving structure is squeezed between the flanged end of the main component and the nut.

While different types of conventional threaded inserts exist, there exists a need for a radially compressible and/or expandable, field installable threaded insert that may be reusable and flangeless, and that can be configured for use with receiving structures having through holes and/or terminal holes.

### SUMMARY

Exemplary embodiments of the present disclosure are generally directed to threaded inserts having a radially compressible and/or expandable cylindrical or tubular body having a longitudinally extending slot formed therein and extending the length of the body. In exemplary embodiments, the threaded inserts can be deformed to change one or more dimensions associated with the threaded inserts to facilitate insertion of the threaded inserts into a hole or bore of a receiving structure and/or to substantially secure the threaded inserts to the receiving structures in response to receipt of a male-type fastening device by the threaded insert.

In accordance with embodiments of the present disclosure, a threaded insert is disclosed that includes a tubular body having a length that extends along a central axis between a first end and a second end. An internal thread extends circumferentially about an inner surface of the tubular body and one or more surface features extend, at least partially, radially outward from an outer surface of the tubular body. A longitudinally extending slot is formed in the tubular body. The slot extends the length of the tubular body to form a circumferential discontinuity along the length of the body.

In accordance with embodiments of the present disclosure, a system for fastening a male-type fastening device to a receiving structure is disclosed. The receiving structure includes a hole configured and dimensioned to receive the threaded insert. The threaded insert has a tubular body extending along a central axis between a first end and a second end. The tubular body has an inner surface including an internal thread and an outer surface including one or more surface features. The tubular body further includes a longitudinally extending slot formed therein that extends the length of the tubular body. The male-type fastening device has an externally threaded portion configured to threadingly engage the internal thread after the threaded insert is disposed within the hole and is configured to urge the outer surface of the tubular body radially outward away from the central axis to fasten the male-type fastening device to the receiving structure.

In accordance with embodiments of the present disclosure, a kit is disclosed that includes a threaded insert and a receiving structure. The threaded insert has a tubular body extending along a central axis between a first end and a second end. The tubular body has an inner surface including an internal thread and an outer surface including one or more surface features. The tubular body further includes a longitudinally extending slot formed therein that extends the length of the tubular body. The receiving structure includes a hole configured and dimensioned to receive the threaded insert. In some embodiments, the kit can include a male-type fastening device having an externally threaded portion configured to threadingly engage the internal thread after the threaded insert is disposed within the hole. The male-type fastening device can be configured to urge the outer surface of the tubular body radially outward away from the central axis to fasten the male-type fastening device to the receiving structure.

In accordance with embodiments of the present disclosure, a method of coupling a male-type fastening device to a hole of a receiving structure is disclosed. The method includes inserting a threaded insert into a hole of a receiving structure. The threaded insert has a tubular body extending along a central axis between a first end and a second end. The tubular body has an inner surface including an internal thread and an outer surface including one or more surface features. The tubular body further includes a longitudinally extending slot formed therein that extends the length of the tubular body. The method further includes threadingly engaging an external thread of a male-type fastening device with the internal thread of the threaded insert and urging the outer surface of the threaded insert radially outward away from the central axis along the length of the tubular body and towards the interior surface of the hole in response to threaded engagement between the external thread and the internal thread. In some embodiments, the step of inserting the threaded insert can include applying a radially inward force to the tubular body to decrease an outer diameter of the tubular body and urging the tubular body into the hole, wherein the tubular body expands after the body is disposed within the hole to contact the interior surface of the hole.

In accordance with embodiments of the present disclosure, a method of manufacturing a threaded insert is disclosed. The method includes forming one surface features on an outer surface of a tubular body, forming a thread on an inner surface of the tubular body, and cutting a longitudinally extending slot in the tubular body, the slot extending a length of the body from a first end of the body to a second end of the body.

In accordance with some embodiments of the present disclosure, the tubular body is radially deformable along the length of the tubular body. For example, a diameter of the outer surface can be configured to be decreased along the length of the tubular body in response to a radially inward force applied to the outer surface of the tubular body and/or a diameter of the outer surface can be configured to be increased along the length of the tubular body in response to the radially outward force applied to the inner surface of the tubular body.

In accordance with some embodiments of the present disclosure, the slot in the tubular body can define first and second longitudinal edges extending the length of the tubular body such that the tubular body is circumferentially discontinuous and terminates along the first and second longitudinal edges. A first portion of the internal thread that terminates at the first longitudinal edge is aligned with a second portion of the internal thread that terminates at the second longitudinal edge so that the internal thread is configured to threadingly engage an external thread of a corresponding male-type fastening device. A width of the slot can be defined by the distance between the longitudinal edges and may be zero or a non-zero value.

In accordance with some embodiments of the present disclosure, the width of the slot can be decreased along the length of the tubular body in response to the radially inward force applied to the outer surface of the tubular body and/or can be expanded along the length of the tubular body in response to the radially outward force applied to the inner surface of the tubular body. A diameter of the outer surface along the length of the tubular body is configured to be decreased when the width of the slot is decreased. A maximum amount by which the diameter of the outer surface is decreased is proportional to an initial value of the width of the slot. The diameter of the outer surface can be decreased by the maximum amount when the width of the slot is reduced to zero.

In accordance with some embodiments of the present disclosure, one or more surface features can be distributed circumferentially on the outer surface between the first and second longitudinal edges and along the length of the tubular body between the first end and the second end. The one or more surface features can be configured to engage an interior surface of a hole over the length of the tubular body.

In accordance with some embodiments of the present disclosure, the first and second ends of the tubular body can have C-shaped outlines and/or can be open to an interior area of the tubular body. For embodiments in which the first and second ends are open, the tubular body can be configured to receive a male-type fastening device configured to engage the internal thread via at least one of the first end or the second end.

In accordance with some embodiments of the present disclosure, the thread can extend the length of the tubular body and can be configured to threadingly engage a corresponding thread of a male-type fastening device over the length of the tubular body.

In accordance with some embodiments of the present disclosure, the threaded insert can be reusable such that the tubular body can be configured to be installed within a hole of a receiving structure, selectively secured thereto, and to be uninstalled from the hole of the receiving structure.

In accordance with some embodiments of the present disclosure, the first end and the second end of the tubular body can be devoid of flanges.

In accordance with some embodiments of the present disclosure, an inner surface of the tubular body can have a diameter that is undersized with respect to a diameter of an externally threaded portion of a corresponding male-type fastening device so that the tubular body expands radially outward upon receipt of the male-type fastening device.

Exemplary embodiments of the present disclosure advantageously provide for a radially compressible and/or expandable threaded insert. Embodiments of the threaded insert can be advantageously devoid of flanges or shoulders, which can reduce manufacturing complexity, machine time, and material usage, and can facilitate use of the threaded insert with through holes and/or terminal holes, and can be installed and/or reused without requiring specialized equipment or tools. Exemplary embodiments of the threaded inserts can be advantageously configured to receive male-type fastening devices from either or both ends of the threaded inserts and/or can be configured to be field installable. This allows the end user to only incur the additional cost for inserts on valves where the user needs inserts and allows a user to quickly reconfigure a valve, flange, or device in the field. In addition, this along with a slot that runs the full length of the insert allows for a streamlined manufacturing process.

In addition, in some embodiments, the threaded insert advantageously provides for a threaded insert formed of a resilient material with sufficient "spring back" such that embodiments of the threaded insert return to its original dimensions, or nearly return to its original dimensions, when a deforming force is removed from the threaded insert (e.g. after removing the male-type fastening device from the threaded insert). Alternatively, in some embodiments, the threaded insert can be formed from a material that does not have such prevalent resilient properties such that once a male threaded fastener had been installed into the threaded insert, the threaded insert does not "spring back", or fully spring back, to its original dimensions when a deforming force is removed from the threaded insert (e.g. after removal of a male-type fastening device). This would result in the threaded insert being permanently installed into the bore or hole, and not re-usable.

In exemplary embodiments of the present disclosure, the threaded insert can advantageously allow for use on, or with, significantly larger internal threads than conventional threaded inserts, and thus, significantly larger screws or bolt sizes can be used than screws or bolts used with conventional threaded inserts. For example, typical, commercially available, threaded inserts are available up to approximately 1/2 inch inner diameter, while exemplary embodiments of the present disclosure can be used with much larger diameter, such as up to, or greater than, 2 inch diameters.

Any permutation or combination of embodiments is envisioned. Other objects, features, and advantages will become apparent from the following detailed description considered in conjunction with the accompanying drawings. It is to be understood, however, that the drawings are designed as an illustration only and not as a definition of the limits of the present disclosure.

### BRIEF DESCRIPTION OF THE DRAWINGS

Fig. 1 shows a perspective view of an exemplary embodiment of a threaded insert in accordance with the present disclosure.
Fig. 2 shows another perspective view the threaded insert of Fig. 1 in accordance with exemplary embodiments of the present disclosure.
Fig. 3 shows a side view of the threaded insert of Fig. 1 in accordance with exemplary embodiments of the present disclosure.
Figs. 4A-C show an end view of the threaded insert of Fig. 1 in accordance with exemplary embodiments of the present disclosure.
Fig. 5 is a cross-sectional view of the threaded insert along the line 5-5 of Fig. 4A.
Fig. 6 shows an exemplary embodiment of the threaded insert being inserted into a corresponding hole of a receiving structure.
Fig. 7 shows an exemplary embodiment of the threaded insert fully received by a corresponding hole of a receiving structure.
Figs. 8-9 shows male-type fastening devices threadingly engaging an exemplary embodiment of the threaded insert when the threaded insert is fully received by a corresponding hole of a receiving structure.
Fig. 10 shows a male-type fastening device engaged with an exemplary embodiment of the threaded insert when the threaded insert is fully received by a corresponding hole of a receiving structure.
Fig. 11 is a flowchart of an exemplary installation process for an exemplary embodiment of the threaded insert in accordance with the present disclosure.
Fig. 12 is a flowchart of an exemplary manufacturing process for an exemplary embodiment of the threaded insert in accordance with the present disclosure.

### DETAILED DESCRIPTION OF EXEMPLARY EMBODIMENTS

Exemplary embodiments of the present disclosure are generally directed to threaded inserts having a radially compressible and/or expandable cylindrical or tubular body that includes one or more surface features disposed about an outer surface of the body, a threaded inner surface, and a longitudinally extending slot extending the length of the body. In exemplary embodiments, the threaded inserts can be deformed to change one or more dimensions associated with the threaded inserts to facilitate insertion of the threaded inserts into a hole or bore of a receiving structure and/or to substantially secure the threaded inserts to the receiving structures in response to receipt of a male-type fastening device by the threaded insert. Exemplary embodiments of the threaded inserts can be flangeless, field installable, and/or can be reusable. Some embodiments of the threaded insert can include a flange.

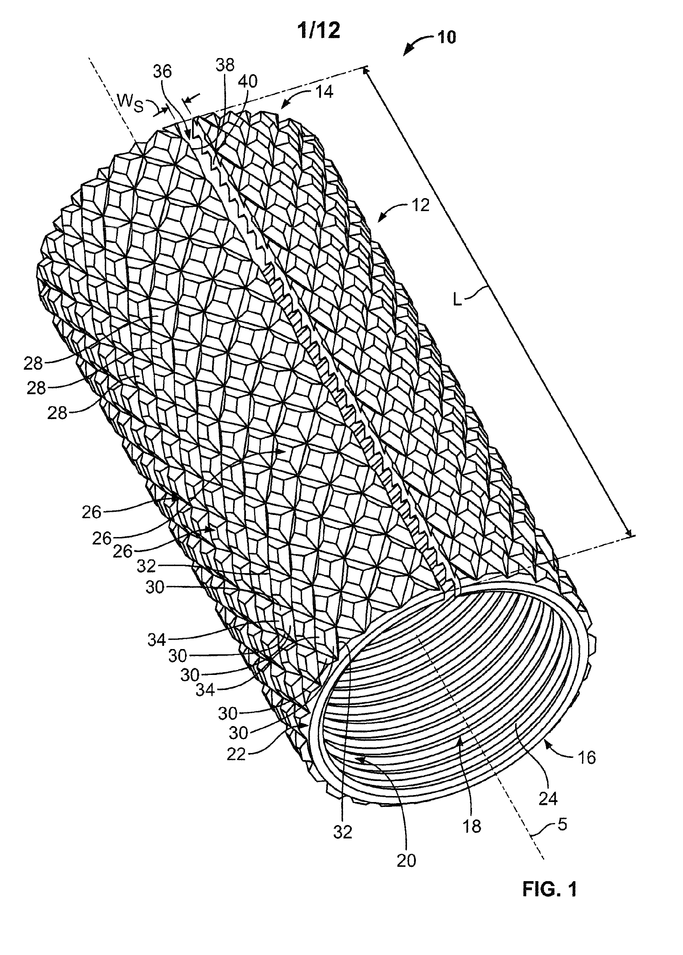

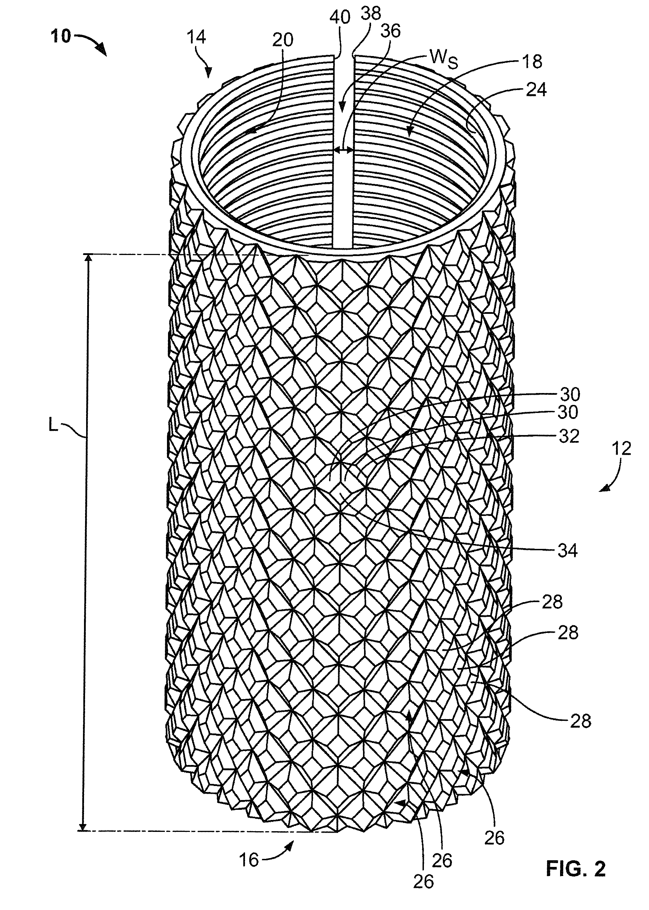

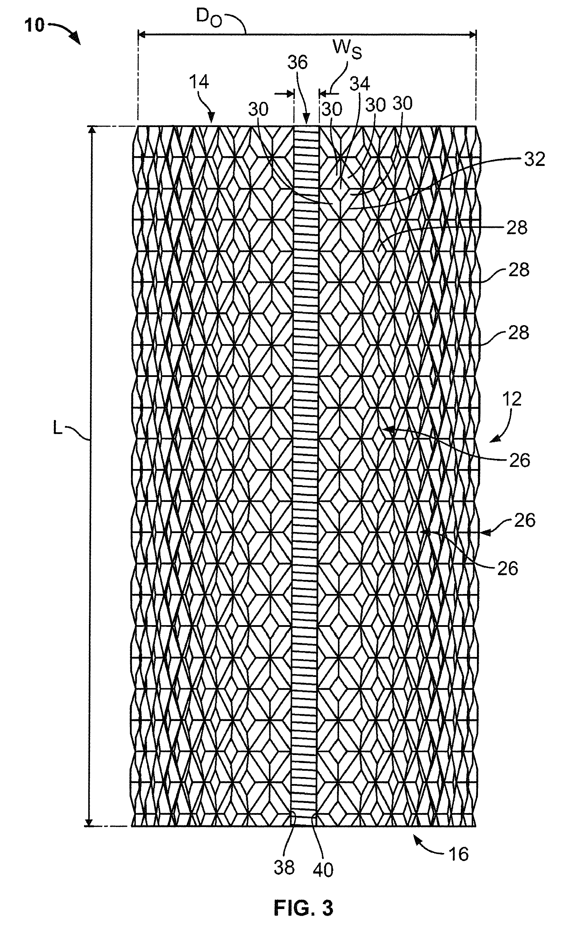

Figs. 1-5 depict various views of an exemplary embodiment of a threaded insert 10 in accordance with the present disclosure. The threaded insert 10 can be configured to fit within a hole formed in a receiving structure to facilitate receipt of a male-type fastening device by the hole to, for example, fasten an object to the receiving structure. As one example, in some embodiments, the threaded insert can be used in plumbing application to facilitate fastening of flanges of valves, such as, but not limited to ball valves, check valves, butterfly valves, diaphragm valves, gate valves, and/or any other suitable valve assemblies. As another example, in some embodiments, the threaded insert can be used to facilitate fastening of parts of furniture together (e.g., parts of desks, tables, chairs, etc.). Other industries and/or fields of use for which exemplary embodiments of the threaded insert 10 can be used include applications in electronics, automotive, and medical industries.

Exemplary embodiments of the threaded insert 10 can be formed using one or more materials. For example, the threaded insert 10, or portions thereof, can be formed of one or more metals, such as steel, brass, copper, aluminum, and/or nickel. In some embodiments, the threaded insert, or portions thereof, can be formed of plastic or composite materials. In some embodiments, the materials used to form the threaded insert 10 can have resilient properties such that the threaded insert 10 can be configured to fully or partially return to its original form after being deformed or upon cessation of a deforming force (e.g., by radial compression or radial expansion). In some embodiments, the materials used to form the threaded insert 10 can have substantially rigid, inflexible properties such that the threaded insert 10 does not return to its original form after being deformed or upon cessation of a deforming force (e.g., by radial compression or radial expansion).

With reference to Figs. 1-3, the threaded insert 10 can have a tubular body 12 extending along a central axis 5 between a first end 14 and a second end 16. The first and second ends 14 and 16 of the body 12 can be devoid of flanges. A length L of the body 12 can be measured along the central axis 5 from the first end 14 to the second end 16 such that the length L defines an entire length of the body 12. In exemplary embodiments, an interior area 18 of the body 12 can be hollow to define a cavity that extends the length L of the body 10 such that the first end 14 and the second end 16 are open to the interior area 18.

The body 12 includes an inner surface 20 and an outer surface 22. The inner surface 20 of the body 12 can include an internal thread 24 (e.g., a helical ridge formed on the inner surface and extending about the central axis 5). The thread 24 can extend circumferentially along the inner surface 20 and about the central axis 5 from the first end 14 to the second end 16 such that the thread 24 extends the length L of the body 12. In some embodiments, a male-type fastening device can threadingly engage the thread 24 from either the first end 14 or the second end 16. In some embodiments, a male-type fastening device can threadingly engage the thread 24 from the first end 14 and another male-type fastening device can threadingly engage the thread 24 the second end 16. The outer surface 22 of the body 12 can include one or more surface features 26 for retaining the threaded insert in a corresponding hole of a receiving structure. Some examples of the one or more surface features can include: knurls; treads; radial and/or lengthwise grooves, protrusions and/or ridges; helical or spiral grooves, protrusions, and/or ridges (e.g., an external thread); and/or any other suitable surface features configured to retain the threaded insert 10 within a corresponding hole of a receiving structure.

In the present embodiment, the surface features 26 have the form of knurls 28 that protrude, at least partially, radially outward from the outer surface 22. The knurls 28 can be distributed about a circumference of the outer surface 22 and/or can be distributed along the length L from the first end 14 to the second end 16 of the body 12 (i.e. across the length L of the body 12). The knurls 28 can form a dimpled pattern on the outer surface 22 of the body having peaks and valleys. In the present embodiment, each knurl 28 can have a truncated pyramidal configuration such that outer surfaces 30 of each knurl 28 is trapezoidal. The trapezoidal outer surfaces 30 of each knurl 28 can generally extend radially outward from a base 32 of the knurl 28 and can be angled inwardly towards each other to converge at a terminal surface 34 of the knurl 28. While the knurls 28 have been illustrated as being truncated pyramids, those skilled in the art will recognize that exemplary embodiments of the knurls 28 can have different configurations. For example, in exemplary embodiments, one or more knurls 28 formed in the outer surface 24 of the body 12 can be pyramidal, conical, truncated cones, spherical, semispherical, cubic, spikes, monolithic projections, cylindrical, and/or can have any other suitable structure for retaining the threaded insert 10 within a corresponding hole of a receiving structure.

Still referring to Figs. 1-3, a longitudinally extending slot 36 can be formed in the body 12. The slot 36 can extend along the central axis 5 from the first end 14 to the second end 16 (i.e. the length L of the body 12) to form a longitudinal opening in the body 12. The slot 36 defines a longitudinal edges 38 and 40 of the body 12 that extend along the central axis 5 from the first end 14 to the second 16 such that the body 12 and thread 24 disposed on the inner surface 20 are circumferentially discontinuous. A width W_{S} of the slot 36 can be measured perpendicularly to the central axis 5 from the edge 38 to the edge 40.

In exemplary embodiments, the width W_{S} of the slot 36 can be decreased along the length L of the body 12 (e.g., from the first end 14 to the second end 16) by applying a radially inward force or pressure to the outer surface 22 of the body 12 to urge the body 12 towards the central axis 5 and/or can be increased by applying a radially outward force or pressure to the inner surface 20 of the body 12 to urge the body 12 away from the central axis 5. In some embodiments, the width W_{S} of the slot 36 can be decreased to approximately zero (W_{S} ≈ 0) (e.g., the edges 38 and 40 physical contact one another) along the length L of the body 12 by applying the radial inward force or pressure. While an exemplary embodiment of the threaded insert 10 has been illustrated to have a initial value for the width W_{S}, those skilled in the art will recognize that the initial value of the width W_{S} can be different in other exemplary embodiments. For example, in some embodiments, the initial value of the width W_{S} can be approximately zero (e.g., W_{S} ≈ 0) such that the edges 38 and 40 defined by the slot 36 can be in physical contact with one another and the width W_{S} cannot be decreased.

As shown in Figs. 1-3, the internal thread 24 can extend circumferentially along the inner surface 20 and about central axis 5. Circumferentially extending portions of the thread can terminate at the longitudinal edges 38 and 40 of the body 12. In exemplary embodiments, the circumferentially extending portion of the thread 24 that terminates at the edge 38 can be aligned with the circumferentially portion of the thread 24 that terminates at the edge 40 such that, despite the circumferential discontinuity of the thread 24 formed by the slot 36, the portions of the thread 24 terminating at the edges 38 and 40, respectively, can be configured and aligned to receive and engage a male-type fastening device having an external thread corresponding to the internal thread 24. Thus, despite the discontinuity formed by the slot 36, a male-type fastening device can threadingly and continuously engage the thread 24 along the length L of the body 12 from the first end 14 to the second end 16.

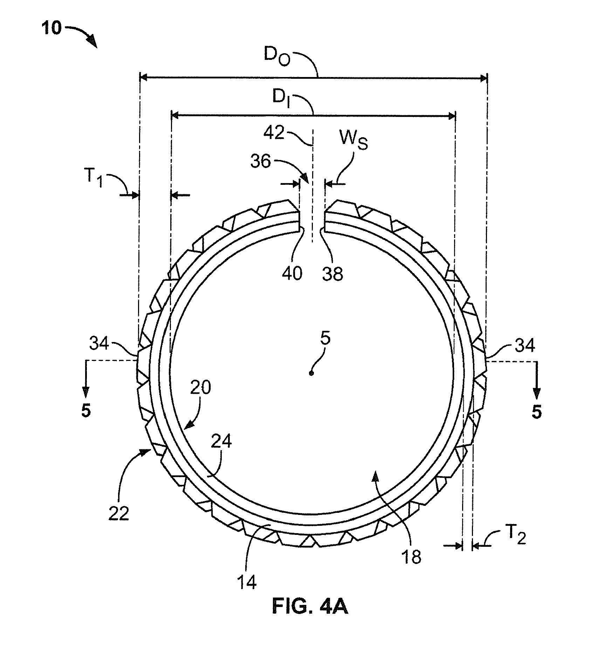

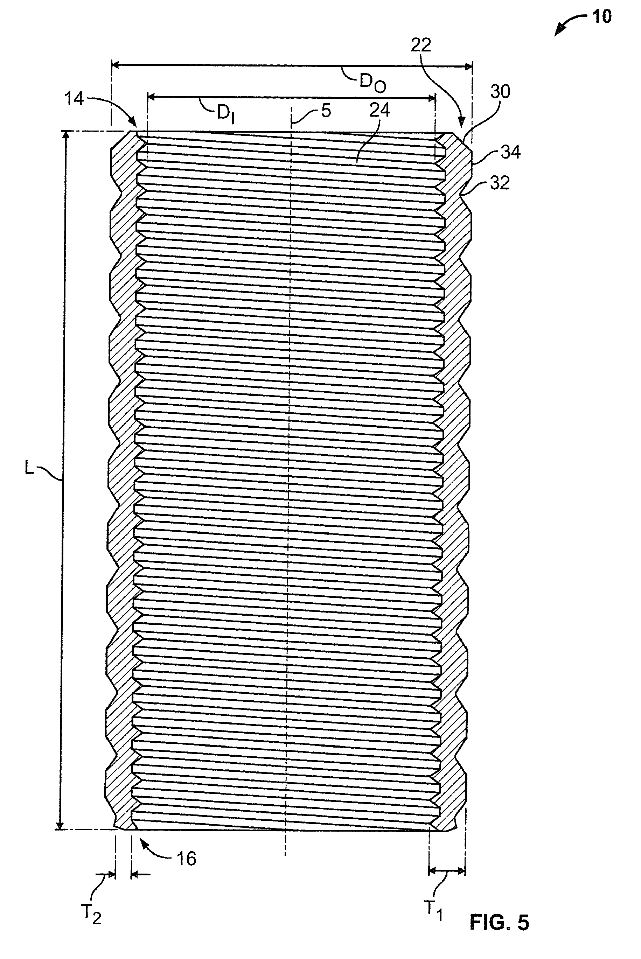

Figs. 4A-C shows a view of an exemplary embodiment of the threaded insert 10 from the first end 14 of the body 12. Fig. 5 shows a cross-sectional view of the body 12 along the line 5-5 of Fig. 4A. In exemplary embodiments, the second end 16 of the body 12 can have an identical configuration and structure. As shown in Fig. 4A, the first end 14 (and second end 16) of the body 12 can have a generally C-shaped or split ring outline terminating at the edges 38 and 40 defined by the slot 36, and as shown in Fig. 5, the thread 24 can extend circumferentially around the central axis 5 along the length L of the body 12 from the first end 14 to the second end 16.

Referring now to Figs. 4A and 5, the body 12 can have an outer diameter D_{O} measured perpendicular to and across the central axis 5 and at points on the outer surface 22 that are radially offset from a mid-point 42 of the slot 36 by ninety degrees. The outer diameter D_{O} can correspond to the distance between opposing portions of the outer surface 22, which in the present embodiment can correspond to opposing terminal surfaces 34 on the outer surface 22. Likewise, the body 12 can have an inner diameter D_{I} defining the interior area 18. The inner diameter D_{I} can be measured perpendicular to and across the central axis 5 and at points on the inner surface 20 that are radially offset from the mid-point 42 of the slot 36 by ninety degrees. The inner diameter D_{I} can correspond to the distance between opposing portions of the inner surface 20, which in the present embodiment can correspond to opposing portions of the thread 24 disposed on the inner surface 20.

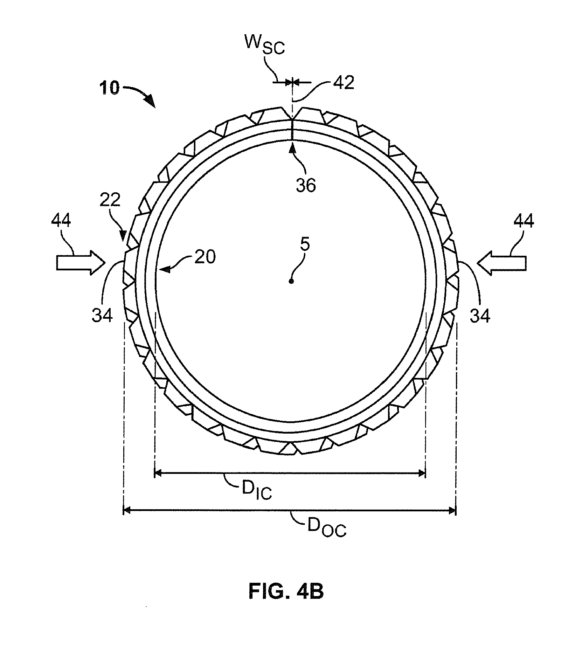

Referring now to Figs. 4A and 4B, the body 12 of the threaded insert 10 can be compressed radially inward along the length L of the body 12 (e.g., from the first end 14 to the second end 16) by applying a radially inward force or pressure (shown by arrows 44) to the outer surface 22 of the body 12 to urge the body 12 towards the central axis 5 so that the body 12 has a decreased or compressed outer diameter D_{OC} and a decreased or compressed inner diameter D_{IC} of the body 12 compared to the initial value for the outer diameter Do and inner diameter D_{I}, respectively. In some embodiments, the amount by which the outer diameter Do and inner diameter D_{I} of the body 12 can be reduced can be proportional to and/or limited by the width W_{S} of the slot 36. As one example, in some embodiments, as the body is urged towards radially inward towards the central axis 5, the width W_{S} of the slot can be reduced to a compressed width W_{SC} until the edges 38 and 40 physically contact one another (e.g., W_{SC} ≈ 0), at which point the compressed outer diameter D_{OC} and compressed inner diameter D_{IC} cannot be further decreased. As another example, the initial value of the width W_{S} can be zero such that the width W_{S} cannot be reduced in response to the a radially inward force or pressure, and therefore, the outer diameter Do and inner diameter D_{I} cannot be decreased. In some embodiments, the compressed outer diameter D_{OC} and compressed inner diameter D_{IC} can return to their initial values (e.g., Do, D_{I}) upon cessation the radially inward force. In some embodiments, the value of the compressed outer diameter D_{OC} and compressed inner diameter D_{IC} can be retained upon cessation of the radially inward force such that the compressed outer diameter D_{OC} and compressed inner diameter D_{IC} do not return to their respective initial values (e.g., D_{O}, D_{I}).

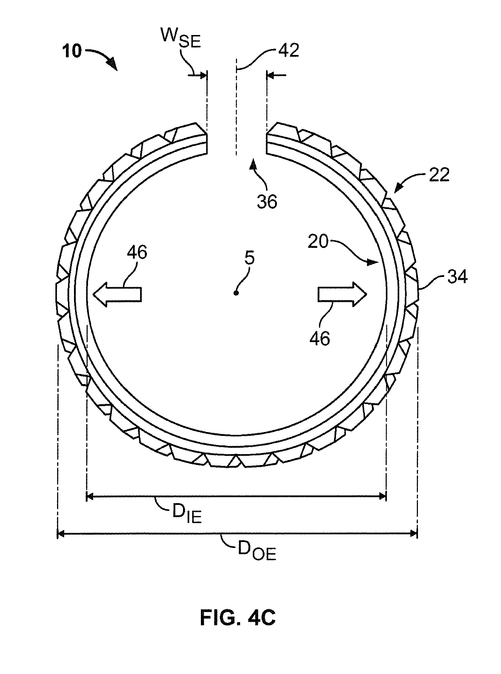

Referring to Figs. 4A and 4C, in exemplary embodiments, the body 12 of the threaded insert 10 can be expanded radially outward along the length L of the body 12 (e.g., from the first end 14 to the second end 16) by applying a radially outward force or pressure (shown by arrows 46) to the inner surface 20 of the body 12 to urge the body 12 away from the central axis 5 so that the body 12 has an increased or expanded outer diameter D_{OE} and an increased or expanded inner diameter D_{IE} of the body 12 compared to the initial value for the outer diameter Do and inner diameter D_{I}, respectively. In some embodiments, the expanded outer diameter D_{OE} and expanded inner diameter D_{IE} can return to their initial values upon cessation the radially outward force. In some embodiments, the value of the expanded outer diameter D_{OE} and expanded inner diameter D_{IE} can be retained upon cessation of the radially outward force such that the expanded outer diameter D_{OE} and expanded inner diameter D_{IE} do not return to their respective initial values.

An overall thickness T₁ of the body 12 can be measured radially with respect to the central axis 5 from a portion of the inner surface 20 closest to the central axis 5 to a portion of the outer surface 22 that is furthest from the central, which in the present embodiment, corresponds to a distance between an inner portion of the thread 24 (e.g., the portion of the thread 24 closest to the central axis 5) and the terminal surface 34. In exemplary embodiments, the overall thickness T₁ can be specified to provide an overall structural strength and overall rigidity to the threaded insert 10.

A minimum thickness T₂ of the body 12 can be measured radially with respect to the central axis 5 from a portion of the inner surface 20 that is furthest away from the central axis 5 to a portion of the outer surface 22 that is closest to the central axis 5, which in the present embodiment, corresponds to a distance between an outer portion of the thread 24 (e.g., the portion of the thread 24 that is furthest away from the central axis 5) and the base 32 of the knurls 28. In some embodiments, the minimum thickness T₂ can be specified to provide sufficient strength and rigidity to the shape of the body 12 and/or to ensure that the body 12 can be deformed by a radially inward and/or radial outward force. In some embodiments, the minimum thickness T₂ can be specified to promote resiliency of the body 12 to return to its original and/or initial structure and dimensions upon cessation of a radially inward and/or radial outward force.

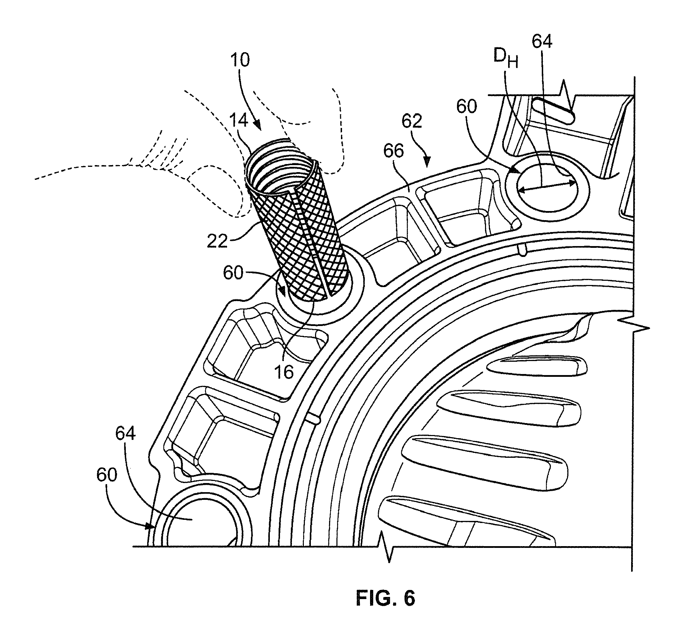

Figs. 6-10 depict an interaction between an exemplary embodiment of the threaded insert 10 and one or more corresponding holes 60 of a receiving structure 62. In the present embodiment, the threaded insert 10 can be radially compressed and/or expanded. The threaded insert 10 can be a field installable threaded insert (e.g., installed in a corresponding hole 60 of the receiving structure 62 in the field after manufacture and distribution of the receiving structure) and/or can be a manufacturer installed threaded insert (e.g., inserted in a corresponding hole 60 of the receiving structure 62 during manufacture of the receiving structure 62). The holes 60 can be through holes such that the holes 60 are accessible from either end and/or can be terminal holes such that the holes 60 are accessible from one end of the holes, but not the other. An interior surface 64 of the holes 60 can be smooth and/or can include surface features to aid in retaining the threaded insert 10. In exemplary embodiments, the receiving structure 62 can be any structure having a hole configured to receive exemplary embodiments of the threaded insert 10. The holes 60 can be formed by, for example, a molding process, a boring process, and/or any suitable process. Some examples of receiving structures 62 that may have holes 60 configured to receive exemplary embodiments of the threaded insert 10 can include, but are not limited to walls; furniture components; flanges for valves, such as ball valves, check valves, butterfly valves, diaphragm valves, and gate valves; and/or any other suitable structures configured to receive/include a threaded insert and to which objects may be fastened using the threaded insert. In the present embodiment, the receiving structure 62 can be a flange body 66 of a butterfly valve.

In piping systems, valves (e.g., butterfly valves) are typically installed between the two flanges of mating pipes. The valve and the two flanges of the mating pipes are held together via bolts inserted in mating bolt holes around the perimeter of the flanges and valve. The holes in the flanges are typically through holes. The holes in the valve can be either through holes, or threaded holes. When the valve has through holes, installation requires the use of threaded rods or bolts that pass completely through the valve and both flanges. When the valve has threaded holes, the installer has the option to use cap screws that pass through one flange and partially into the threaded valve body.

While an exemplary embodiment of the present disclosure has been illustrated using a flange for a butterfly valve, those skilled in the art will recognize that exemplary embodiments of the present disclosure can be implemented for other valve types, such as ball valves, check valves, butterfly valves, diaphragm valves, gate valves, and the like. Furthermore, one skilled in the art will recognize that exemplary embodiments of the present disclosure can be advantageously utilized in many industries outside of plumbing. For example, exemplary embodiments of the present disclosure can be utilized in the furniture industry, electronics industry, automotive industry, medical industry, and the like to facilitate fastening of a male-type fastening device to a receiving structure using a threaded insert as an interface.

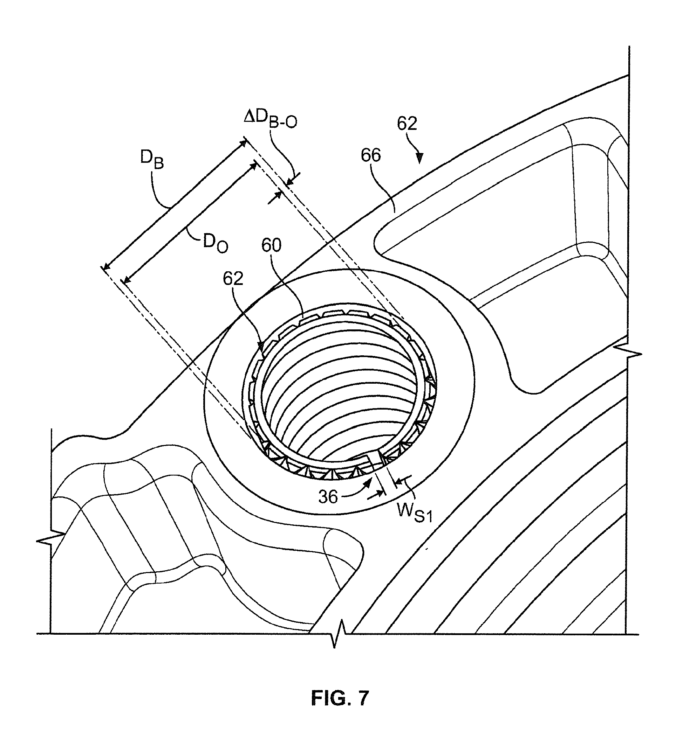

Referring to Figs. 6 and 7, the one or more holes 60 can be disposed in the flange body 66 (e.g., distributed generally around a circumference of the flange body 66) and each hole 60 can be configured and dimensioned to receive the threaded insert 10. As one example, in some embodiments, the outer diameter Dₒ of the threaded insert 10 can be smaller than a diameter D_{H} of the holes 60 such that the threaded insert 10 can be received by the holes 60. The difference between the diameter D_{H} and the outer diameter Dₒ can be denoted as Δ*D_{H-O}* = *D_{H}* - *D_{O}*. As another example, in some embodiments, the initial value of the outer diameter Dₒ of the threaded insert 10 can be larger than a diameter D_{H} of the holes 60 such that the threaded insert 10 cannot be received by the holes 60. For such embodiments, the outer diameter Dₒ can be reduced to the compressed outer diameter D_{OC} by applying a radially inward pressure or force to the threaded insert 10 so that the compressed outer diameter D_{OC} can be smaller than the diameter D_{H} of the holes 60 (Δ*D_{H-OC}* = *D_{H}* - *D_{OC}*) and the threaded insert 10 can be received by the holes 60. In some embodiments, when the outer diameter Dₒ of the threaded insert 10 is reduced to the compressed outer diameter D_{OC} and is inserted into the hole 60, the threaded insert 10 can expand radially until the outer surface 22 of the threaded insert 10 physically contacts the interior surface of the hole 60.

The threaded insert 10 may be received by the hole 60 such that the threaded insert fits snugly within the hole 60, fits loosely with the hole 60, or forms a slight press fit with the hole 60. As one example, the outer surface 22 of the body 12, or a portion thereof, can be in physical contact with the interior surface 64 of the hole 60 when the threaded insert is inserted into the hole 60. As another example, the outer diameter Do of the threaded insert 10 can be small enough that the threaded insert 10 can be inserted into the hole 60 such that the outer surface 22 of the threaded insert 10 can be positioned so that the outer surface does not contact the interior surface 64 of the hole 60.

In some embodiments, the length L of the threaded insert 10 can correspond to a depth of the hole 60. For example, the length L of the threaded insert 10 can be substantially identical to the depth of the hole 60, can be slightly greater than the depth of the hole 60, or can be slightly smaller than the depth of the of the hole 60. In the present embodiment, the threaded insert 10 can be fully received by the hole 60 such that the first end 14 and/or second end 16 of the threaded insert 10 are flush with the ends of the of the hole or slightly recessed with respect to the ends of the hole. For such embodiments, the threaded insert 10 can be dimensioned and configured so that no portion of threaded insert 10 extends outwardly from the hole beyond the ends of the hole.

The slot 36 of the threaded insert can have a width W_{S1} when the threaded insert is disposed within the hole 60. In some embodiments, the width W_{S1} can be equal to the initial width W_{S}. For example, the width W_{S1} can be equal to the width W_{S} when the threaded insert 10 is inserted into the hole 60 without reducing the outer diameter Dₒ of the threaded insert 10, and therefore without reducing the initial value of the width W_{S} of the slot 36. In some embodiments, the width W_{S1} may not be equal to the width W_{S}. For example, the width W_{S1} may not be equal to the width W_{S} when the threaded insert 10 is inserted into the hole 60 by reducing the outer diameter Do of the threaded insert 10 to the compressed outer diameter D_{OC}, and therefore, compressing the width W_{S} of the slot 36 to the width W_{S1}.

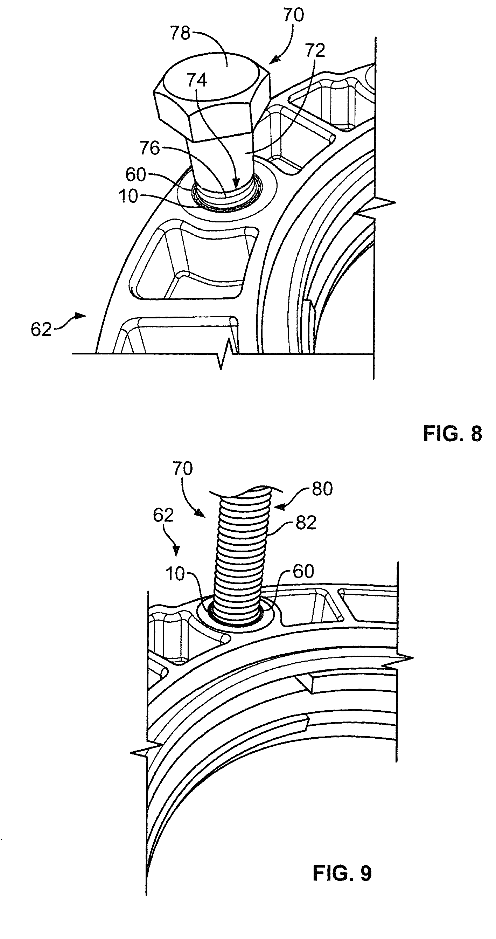

Referring now to Figs. 8 and 9, an exemplary embodiment of the threaded insert 10 disposed within the hole 60 of the receiving structure 62 can receive a male-type fastening device 70 within an interior area of the threaded insert 10 (e.g., the interior area 18). As shown in Fig. 8, the male-type fastening device 70 can be a bolt 72 including a threaded portion 74 having thread 76 and a flanged head 78. As shown in Fig. 9, the male-type fastening device 70 can be a threaded rod 80 including thread 82. In exemplary embodiments, the internal thread of the threaded insert 10 can be sized so that once the threaded insert 10 is disposed within the hole 60, the thread of the threaded insert 10 can be slightly undersized compared to the thread 76 and the thread 82, and/or the inner diameter of the threaded insert 10 can be sized to be slightly smaller than a diameter of the thread portion 74 of the bolt 70 and/or a diameter of the threaded rod 80. As the thread 76 or thread 82 engages the internal thread of the threaded insert 10, the bolt 70 or threaded rod 80, respectively presses against the inner surface of the threaded insert and forces the outer surface of threaded insert radially outward to increase the inner and outer diameters of the threaded insert 10 so that the outer surface of the threaded insert presses firmly against the interior surface of the hole 60 to substantially secure the threaded insert 10 within the hole 60.

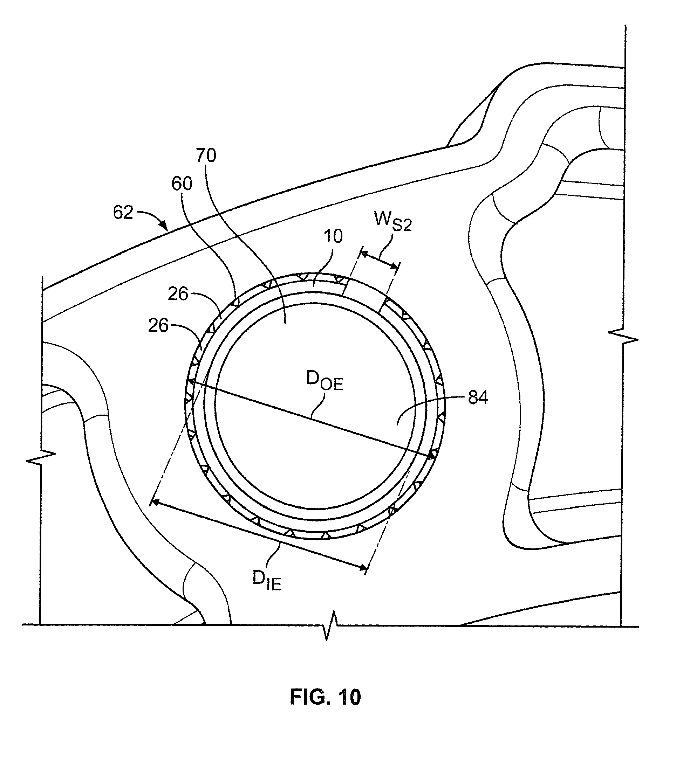

Fig. 10 shows a male-type fastening device 70 (e.g., the bolt 72 or the threaded rod 80) engaged with an exemplary embodiment of the threaded insert 10, which is fully received by the corresponding hole 60 of the receiving structure 62. More particularly, Fig. 10 shows the second end 16 of the threaded insert 10 and a distal end 84 of the male-type fastening device 70 with respect to a distal end of the hole 60, which in the present embodiment is a through-hole. As described herein, the male-type fastening device 80 engages the thread of the threaded insert to urge the inner diameter D_{I} to expand to the expanded inner diameter D_{IE} and the outer diameter Dₒ to expand to the expanded outer diameter D_{OE} to force the surface features 26 (e.g., knurls) to press firmly against the interior surface of the hole 60. To accommodate the change in the inner and outer diameters of the threaded insert 10, the width W_{S1} of the insert within the hole can expand to a width W_{S2}, which is greater than the width W_{S1}. While Fig. 10 has been illustrated to show a single male-type fastening device threadingly engaging the threaded insert 10 along the length of the threaded insert 10, those skilled in the art will recognize that the male-type fastener can be configured or utilized to engage the threaded insert along a portion of the length. For example, in some embodiments, a first male-type fastening device can threadingly engage the threaded insert from a first end of the threaded insert and a second male-type fastening device can threadingly engage the threaded insert from a second end of the threaded insert such that each male-type fastening device threadingly engages the threaded insert along a portion of the length of the threaded insert. As another example, a single male-type fastening device fastener can threadingly engage the threaded insert from a first end and extend partially through the threaded fastener. In such circumstances, for example, the expansion/contraction of the width W_{S} may not be uniform along the entire length of the slot - the width of the slot at a first position along the length of the body from the first end to the second end is unequal to the width of the slot at a second position along the length of the body from the first end to the second end, such that, for example, the threaded insert takes on a somewhat conical shape (e.g., reducing diameter/reducing radius).

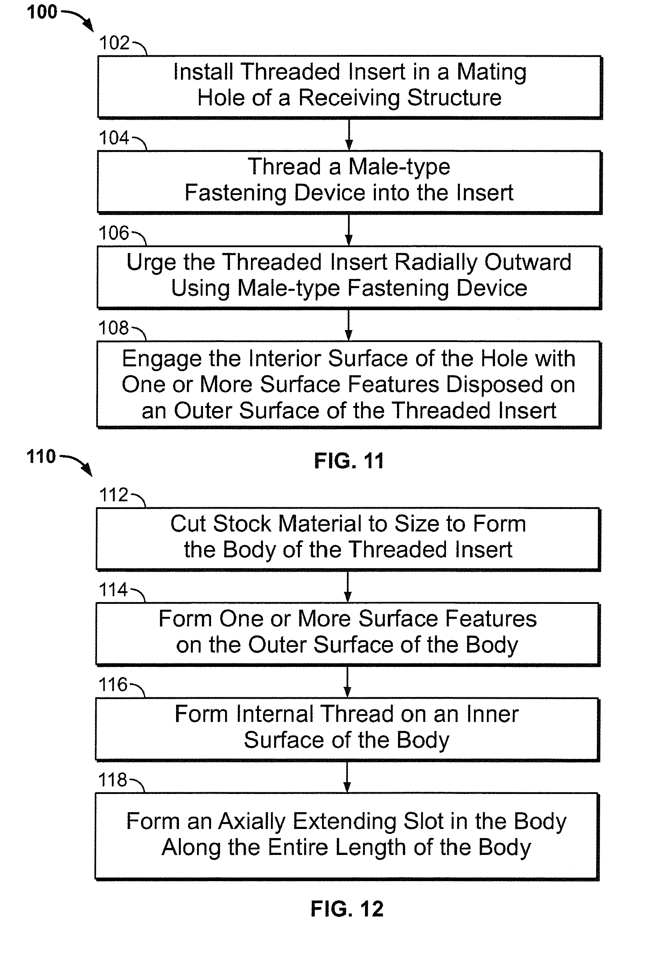

Fig. 11 is a flowchart of an exemplary installation process 100 utilizing an exemplary embodiment of the threaded insert 10. To begin, at step 102, the threaded insert can be installed into a mating hole or bore of a receiving structure. As one example, the threaded insert may be radially compressed so that the outer diameter of the threaded insert fits with the hole. As another example, the outer diameter of the threaded insert can fit within the hole without radially compressing the threaded insert. The fit between the threaded insert and the hole can be snug, and may be a slight press fit. At step 104, a male-type fastening device (e.g., a bolt or threaded rod) can be threaded into the insert so that the external thread of the male-type fastening device threadingly engages the internal thread of the threaded insert. This can optionally be a well-lubricated male-type fastening device. As the male-type fastening device is threaded into the threaded insert, the threaded insert is urged radially outward by male-type fastening device at step 106 because the inner diameter of the threaded insert is slightly smaller than the outer diameter of the threaded portion of the male-type fastening device. As the threaded insert expands radially outward, the surface features on the outer surface of the threaded insert engage and firmly press against the interior surface of the hole at step 108 to secure the threaded insert within the hole (e.g., prevent the insert from rotating or pulling out of the hole) and to secure the male-type fastening device to the receiving structure.

Fig. 12 is a flowchart of an exemplary manufacturing process 110 that can be utilized to manufacture an exemplary embodiment of the threaded insert 10. At step 112, a stock material having a tubular configuration can be cut to size to form a length of the body of the threaded insert. At step 114, one or more surface features can be formed on the outer surface of the body. For example, the outer surface of the body can be machined and finished to form one or more knurls on the outer surface. At step 116, an internal thread can be formed circumferentially about an inner surface of the body. The internal thread can extend the length of the body from a first end of the body to a second end of the body. The internal thread can be formed by drilling, tapping, and/or machining the inner surface. At step 118, a longitudinally extending slot can be formed in the tubular body. For example, the slot can be cut or milled into the body and can extend the length of the body from a first end to the second end. The slot can form an opening in the body that defines a circumferential discontinuity in the body along the length of the body. The formation of the slot (step 118) can occurs after the formation of the threading and the surface features.

While preferred embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the scope of the invention as defined by the appended claims.

## Claims

1. A threaded insert (10) comprising:
a tubular body (12) having a length (L) extending along a central axis (5) between a first end (14) and a second end (16);
an internal thread (24) extending circumferentially about an inner surface (20) of the tubular body (12);
one or more surface features (26) extending, at least partially, radially outward from an outer surface (22) of the tubular body (12); and
a longitudinally extending slot (36) formed in the tubular body (12), the slot (36) extending the length (L) of the tubular body (12) to form a circumferential discontinuity along the length (L) of the tubular body (12) from the first end (14) to the second end (16).

2. The threaded insert (10) of claim 1, wherein the tubular body (12) is configured so as to be radially deformable along the length (L) of the tubular body (12), in particular so that an outer diameter (Do) thereof is decreased along the length (L) of the tubular body (12) in response to a radially inward force applied to the outer surface (22) of the tubular body (12), and/or so that an outer diameter (Do) thereof is increased along the length (L) of the tubular body (12) in response to the radially outward force (46) applied to the inner surface (20) of the tubular body (12).

3. The threaded insert (10) of claim 1, wherein the slot (36) defines first and second longitudinal edges (38, 40) extending the length (L) of the tubular body (12), a width (W_{S}) of the slot (36) being defined by the distance between the longitudinal edges (38, 40).

4. The threaded insert (10) of claim 3, wherein the internal thread (24) is circumferentially discontinuous and terminates along the first and second longitudinal edges (38, 40).

5. The threaded insert (10) of claim 4, wherein a first portion of the internal thread (24) that terminates at the first longitudinal edge is aligned with a second portion of the internal thread (24) that terminates at the second longitudinal edge so that the internal thread (24) is configured to threadingly engage an external thread (74) of a corresponding male-type fastening device (70).

6. The threaded insert (10) of any one of claims 3 to 5, wherein the tubular body (12) is configured so that the width (W_{S}) of the slot (36) is decreased along the length (L) of the tubular body (12) in response to the radially inward force applied to the outer surface (22) of the tubular body (12), and/or so that the width (W_{S}) of the slot (36) is expanded along the length (L) of the tubular body (12) in response to the radially outward force (46) applied to the inner surface (20) of the tubular body (12).

7. The threaded insert (10) of claim 6, wherein the tubular body (12) is configured so that an outer diameter (Do) thereof along the length (L) of the tubular body (12) is decreased when the width (W_{S}) of the slot (36) is decreased, wherein a maximum amount by which the outer diameter (Do) of the tubular body (12) is decreased is preferably proportional to an initial value of the width (W_{S}) of the slot (36), and wherein the outer diameter of the tubular body (12) is preferably decreased by the maximum amount when the width (W_{S}) of the slot (36) is reduced to zero.

8. The threaded insert (10) of any one of claims 3 to 7, wherein the width (W_{S}) of the slot (36) at a first position along the length (L) of the tubular body (12) from the first end (14) to the second end (16) is unequal to the width (W_{S}) of the slot (36) at a second position along the length (L) of the tubular body (12) from the first end (14) to the second end (16).

9. The threaded insert (10) of any one of the preceding claims, wherein the one or more surface features (26) are distributed circumferentially on the outer surface (22) between the first and second longitudinal edges (38, 40) along the length (L) of the tubular body (12) between the first end (14) and the second end (16).

10. The threaded insert (10) of any one of the preceding claims, wherein the first (14) and second ends (16) of the tubular body (12) have C-shaped outlines.

11. The threaded insert (10) of any one of the preceding claims, wherein the first (14) and the second end (16) of the tubular body (12) are open to an interior area (18) of the tubular body (12).

12. The threaded insert (10) of any one of the preceding claims, wherein the internal thread (24) extends the length (L) of the tubular body (12).

13. The threaded insert (10) of claim 12, wherein the first (14) and second ends (16) of the tubular body (12) are open to an interior area (18) of the tubular body (12), and the interior area (18) of the tubular body (12) is configured to receive a male-type fastening device (70) configured to engage the internal thread (24) via at least one of the first end (14) or the second end (16).

14. The threaded insert (10) of claim 12 or 13, wherein the internal thread (24) is configured to threadingly engage a corresponding external thread (74) of a male-type fastening device (70) over the length (L) of the tubular body (12), and the one or more surface features (26) are configured to engage an interior surface (64) of a hole (60) over the length (L) of the tubular body (12).

15. The threaded insert (10) of any one of the preceding claims, wherein the tubular body (12) is configured to be installed within a hole (60) of a receiving structure (62) and to be selectively secured thereto and is configured to be uninstalled from the hole (60) of the receiving structure (62) and reusable.

16. The threaded insert (10) of any one of the preceding claims, wherein the first end (14) and the second end (16) are devoid of a flange.

17. A kit comprising:
a threaded insert (10) according to any one of the preceding claims; and
a receiving structure (62) having a hole (60) configured and dimensioned to receive the threaded insert (10).

18. A system for fastening a male-type fastening device (70) to a receiving structure (62), the system comprising:
a kit according to claim 17; and
a male-type fastening device (70) having an externally threaded portion (74) configured to threadingly engage the internal thread (24) after the threaded insert (10) is disposed within the hole (60) and to urge the outer surface (22) of the tubular body (12) radially outward away from the central axis (5) to fasten the male-type fastening device (70) to the receiving structure (62).

19. The system of claim 18, wherein an inner surface (20) of the tubular body (12) has a diameter that is under sized with respect to a diameter of the externally threaded portion (74) of the male-type fastening device (70) so that the tubular body (12) expands radially outward upon receipt of the male-type fastening device (70).

20. The system of claim 18 or 19, wherein the hole (60) is configured and dimensioned to receive the threaded insert (10) after an outer diameter (Do) of the tubular body (12) is reduced along the length (L) by a radially inward force.

21. A method of coupling a male-type fastening device (70) to a hole (60) of a receiving structure (62) comprising:
inserting a threaded insert (10) into a hole (60) of a receiving structure (62), the threaded insert (10) being configured according to any one of claims 1 to 16;
threadingly engaging an external thread (74) of a male-type fastening device (70) with the internal thread (24) of the threaded insert (10); and
urging the outer surface (22) of the threaded insert (10) radially outward away from the central axis (5) along the length (L) of the tubular body (12) and towards the interior surface (64) of the hole (60) in response to threaded engagement between the external thread (74) and the internal thread (24).

22. The method of claim 21, wherein inserting the threaded insert (10) comprises:
applying a radially inward force to the tubular body (12) to decrease an outer diameter (Do) of the tubular body (12); and
urging the tubular body (12) into the hole (60),
wherein the tubular body (12) expands after the tubular body (12) is disposed within the hole (60) to contact the interior surface (64) of the hole (60).

23. A method of manufacturing a threaded insert (10) comprising:
forming surface features (26) on an outer surface (22) of a tubular body (12) and a thread on an inner surface (20) of the tubular body (12); and
after said forming, cutting a longitudinally extending slot (36) in the tubular body (12), the slot (36) extending a length (L) of the tubular body (12) from a first end (14) of the tubular body (12) to a second end (16) of the tubular body (12).
